# EUROPÄISCHE PATENTSCHRIFT

(11) **EP 2 108 097 B1**
(45) Veröffentlichungstag und Bekanntmachung des Hinweises auf die Patenterteilung: **02.09.2015**
(21) Anmeldenummer: 07857819.2
(22) Anmeldetag: 19.12.2007
(51) Int. Cl.: F24H 9/20

(54) **VORRICHTUNG ZUR STEUERUNG EINER HEIZVORRICHTUNG**
DEVICE FOR CONTROLLING A HEATING DEVICE
DISPOSITIF POUR LA COMMANDE D'UN DISPOSITIF DE CHAUFFAGE

(30) Priorität: 10.01.2007 DE 102007001492
(43) Veröffentlichungstag der Anmeldung: 14.10.2009
(73) Patentinhaber: BSH Hausgeräte GmbH, 81739 München (DE)
(72) Erfinder: ENGLISCH, Christian, 83324 Ruhpolding (DE)
(86) Internationale Anmeldenummer: PCT/EP2007/064196
(87) Internationale Veröffentlichungsnummer: WO 2008/083900

(56) Entgegenhaltungen:
- EP-A- 1 686 329
- DE-A1- 2 558 509
- GB-A- 1 029 567
- GB-A- 1 143 106

## Beschreibung

Die Erfindung betrifft eine Vorrichtung zur Steuerung einer Heizvorrichtung, insbesondere in Durchlauferhitzern, umfassend einen Strömungszulauf und einen Strömungsablauf, zwischen welchen eine Venturidüse angeordnet ist, an welcher ein die vor und nach der Düse anliegenden Drücke vergleichendes Differenzdruckmittel angeschlossen ist, welches die ermittelte Druckdifferenz an ein Schaltmittel einer Steuerungs- und/oder Regelungselektronik für ein Heizelement übermittelt.

Bei Durchlauferhitzern ist eine Bestimmung bzw. Messung des Wasserdurchflusses notwendig, um Steuer- und Regelvorgänge insbesondere bezüglich der Heizleistung in Abhängigkeit von dem betreffenden Wasserdurchfluss auszulösen bzw. zu regulieren. Hierzu sind im Stand der Technik verschiedene technische Möglichkeiten bekannt.

So beschreibt beispielsweise die DE 1 126 043 einen elektrischen Wassererhitzer mit Fließdruckschalter. Bei diesem wird durch den in einer Druckkammer erzeugten Überoder Unterdruck eine Quecksilbersäule verdrängt und an elektrische Kontakte herangeführt.

**Die** DE 25 58 509 A1 **und** GB 1 143 106 A **jeweils offenbaren ebenfalls einen Wassererhitzer mit einer im Wasserdurchlauf angeordneten Venturidüse und einem Differenzdruckschalter zur Steuerung einzelner Heizleistungsstufen.**

Im Stand der Technik sind weitere technische Möglichkeiten zur Steuerung einer Heizungsvorrichtung, wie z. B. hydraulisch oder elektronisch gesteuerte Vorrichtungen bekannt, die jedoch eine Reihe von Nachteilen aufweisen.
Bei hydraulisch gesteuerten Durchlauferhitzern mit Venturidüse wird über einen Wasserdurchfluss an einer Venturidüse durch einen Über- und Unterdruckabgriff ein Differenzdruck gebildet. Dieser Differenzdruck wird über eine Membrane mechanisch auf einen Schaltsatz übertragen, der die Leistung durchflussabhängig ein- und ausschaltet. Diese Vorrichtung weist den Nachteil auf, dass der mechanische Schaltsatz aufwändig und wartungsintensiv ist, darüber hinaus ermöglicht er nur ein Ein- und Ausschalten der Leistung, aber keine Feinregulierung.

Bei herkömmlichen elektronisch gesteuerten Durchlauferhitzern mit Venturidüse wird ein Signal einer Venturidüse elektronisch weitergeleitet. Auch diese Vorrichtung weist den Nachteil auf, dass sie nur ein Ein- und Ausschalten der Leistung, aber keine Feinregulierung ermöglicht.

Bei elektronisch gesteuerten Durchflusserhitzern mit Messturbine erfolgt eine Durchflussmessung über eine Messturbine. Diese Vorrichtung ermöglicht zwar eine Übertragung analoger Informationen, benötigt aber eine aufwändige Auswertung der Informationen über eine Zeitmessung der Ausgangsimpulse. Darüber hinaus verschleißen die Messturbinen häufig sehr schnell.

Bei elektronisch gesteuerten Durchlauferhitzern schließlich, bei denen eine Durchflussmessung über einen Paddelschalter erfolgt, ist ebenfalls nur ein Ein- und Ausschalten der Leistung, aber keine Feinregulierung möglich.

Hiervon ausgehend liegt der Erfindung die Aufgabe zugrunde, eine gegenüber dem Stand der Technik verbesserte Vorrichtung zur Steuerung einer Heizvorrichtung zur Verfügung zu stellen, welche die oben genannten Nachteile vermeidet.

Diese Aufgabe wird durch eine Vorrichtung zur Steuerung einer Heizvorrichtung mit den Merkmalen des Anspruchs 1 gelöst. Vorteilhafte Aus- und Weiterbildungen der Erfindung, welche einzeln oder in Kombination miteinander eingesetzt werden können, sind Gegenstand der Unteransprüche.

Die erfindungsgemäße Vorrichtung zur Steuerung einer Heizvorrichtung baut auf gattungsgemäßen Vorrichtungen zur Steuerung einer Heizvorrichtung dadurch auf, dass als Schaltmittel ein **Kraftsensor** vorgesehen ist, welcher die übermittelten Druckdifferenzen in eine Vielzahl gestufter oder stufenloser korrespondierender elektrischer Signale für die Steuerungs- und/oder Regelungselektronik umwandelt. Über die elektrische Verbindung eines Druckdifferenzmittels mit einer Steuerungs- und/oder Regelungselektronik kann eine Feinregulierung eines Heizelementes vorgenommen werden, und nicht nur, wie im Stand der Technik üblich, ein Ein- und Ausschalten des Heizelementes. Gleichzeitig weist die erfindungsgemäße Vorrichtung aber nicht den mechanischen Verschleiß auf, den z.B. eine Messturbine aufweisen würde. Ein weiterer Vorteil der vorliegenden Erfindung besteht darin, dass bei der vorliegenden Anordnung der Druckdifferenzmittel diese ohne weiteren konstruktiven Aufwand vom Wasser getrennt sind. Dies ist besonders bei

Kundendienstfällen oder Reparaturen von Vorteil, weil hier der Sensor ausgetauscht werden kann, ohne den Wasserkreislauf zu öffnen.

Mit "stufenlos" wird ein Messsignal bezeichnet, mit Hilfe dessen eine Leistungsvorrichtung, wie z.B. eine Heizung, an- und ausgestellt werden kann, mit der aber auch eine Vielzahl von Zwischenstufen erreicht werden kann. Wird an eine Heizung ein stufenloses Signal übertragen, so bedeutet dies, dass die Heizung z.B 5, 10, 20, 50, 75 % usw. ihrer maximalen Leistung liefern kann, bzw. eine Vielzahl von Zwischenstufen zwischen diesen Werten. Dies ist bei Geräten wie Durchlauferhitzern deshalb besonders bedeutsam, weil aufgrund dieser Übertragbarkeit von stufenlosen Messsignalen eine sehr exakte Regulierung bis hin zu einer gradgenauen Regulierung der Geräteleistung in Abhängigkeit von dem durchströmenden Wasser erfolgen kann.

Von Vorteil ist es dabei, wenn in einer bevorzugten Ausführungsform die Übermittlung der Druckdifferenzen dadurch erfolgt, dass ein mechanischer Stößel proportional zur übermittelten Druckdifferenz einen Weg zurücklegt, und dieser Weg durch den Sensor in eine Vielzahl gestufter oder stufenloser korrespondierender elektrischer Signale für die Steuerungs- und/oder Regelungselektronik umwandelbar ist.

In einer bevorzugten Ausführungsform ist dies Mittel zur Umwandlung der Druckdifferenz in ein elektrisches Signal ein Kraftsensor. Dies hat den Vorteil, dass die Vorrichtung besonders kostengünstig herzustellen ist, da Kraftsensoren in vielerlei Ausführungen heute kostengünstig erhältlich sind.

Als vorteilhaft hat es sich erwiesen, wenn die Vorrichtung zur Steuerung einer Heizvorrichtung Kraftsensoren aufweist, die sogenannte Force Sensing Resistor (FSR) Sensoren und/oder Piezosensoren sind. Beide Sensoren sind in vielen Varianten einfach und kostengünstig erhältlich.

Eine gute Übertragung der Daten lässt sich bei der Vorrichtung zur Steuerung einer Heizvorrichtung in vorteilhafter Weise dadurch erreichen, dass diese einen Spannungsteiler aufweist, der einen Force Sensing Resistor (FSR) Sensoren und einen in Serienschaltung damit verbundenen Festwiderstand umfasst.

Als vorteilhaft hat es sich auch erwiesen, wenn die Vorrichtung zur Steuerung einer Heizvorrichtung einen Spannungsteiler aufweist, an dem eine konstante Spannung anliegt.

In einer weiteren bevorzugten Ausführungsform weist die Vorrichtung zur Steuerung einer Heizvorrichtung einen Force Sensing Resistor (FSR) Sensor auf, an dem eine konstante Spannung anliegt.

Als besonders vorteilhaft hat es sich erwiesen, wenn die Vorrichtung zur Steuerung einer Heizvorrichtung eine Venturidüse aufweist, die über eine hydraulische Verbindung mit einer Differenzdruckdose verbunden ist, eine Membran der Differenzdruckdose eine Verbindung mit einem Stößel aufweist, der Stößel eine mechanische Verbindung mit einem Kraftsensor aufweist, und der Kraftsensor eine elektrische Verbindung mit einem Schalter einer Steuerungs- und/oder Regelungselektronik aufweist, und über die elektrische Verbindung ein analoges Messsignal übertragbar ist.

Durch die erfindungsgemäße Vorrichtung zur Steuerung einer Heizvorrichtung kann mit geringem Aufwand und ohne mechanischen Verschleiß eine Feinregulierung einer Warmwasserbereitung erzielt werden.

Weitere Vorteile und Ausgestaltungen der Erfindung werden im Folgenden anhand von einem Ausführungsbeispiel sowie unter Bezugnahme auf die beiliegenden Zeichnungen erläutert.

Darin zeigen schematisch:
Fig. 1 eine schematische Darstellung eines Ausführungsbeispiels einer elektronisch geregelten Vorrichtung zur Steuerung einer Heizvorrichtung;
Fig. 2 eine schematische Darstellung einer herkömmlichen hydraulisch gesteuerten Vorrichtung zur Steuerung einer Heizvorrichtung; sowie
Fig. 3 ein Prinzipschaltbild einer Ausführungsform einer elektronisch geregelten Vorrichtung zur Steuerung einer Heizvorrichtung.

Bei der nachfolgenden Beschreibung einer bevorzugten Ausführungsform der vorliegenden Erfindung bezeichnen gleiche Bezugszeichen gleiche oder vergleichbare Komponenten.

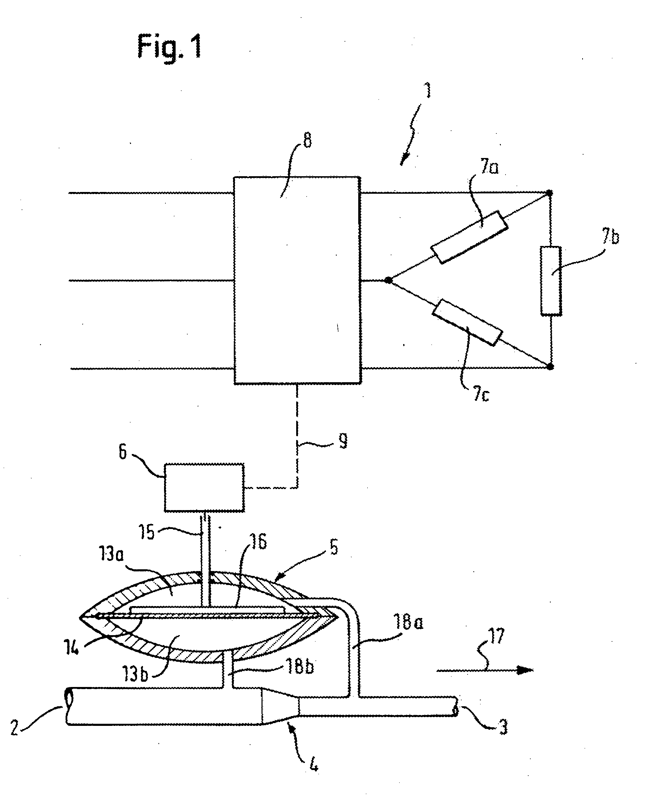

Fig. 1 zeigt in einer schematischen Darstellung eine Ausführungsform einer Vorrichtung zur Steuerung einer Heizvorrichtung 1. Durch einen Wasserdurchfluss von einem Strömungszulauf 2 zu einem Strömungsablauf 3 in Strömungsrichtung 17 wird an einer Venturidüse 4 durch einen Abgriff eines Überdrucks und eines Unterdrucks ein Differenzdruck gebildet. Dieser Differenzdruck wird in der Differenzdruckdose 5 über eine Membrane 14 über eine mechanische Verbindung mit Stößel 15 und Teller 16 auf einen Sensor 6 übertragen. Dieser Sensor 6 ist ein Kraftsensor. Der Kraftsensor 6 ist ein sogenannter Force Sensing Resistor (FSR) Sensor und/oder ein Piezosensor. Der Kraftsensor 6 ändert durch die Kraft- und Druckwirkung seine elektrischen Eigenschaften, z.B. seinen elektrischen Widerstand. Diese Kraftsensoren 6 liefern ein analoges elektrisches Signal 9 welches relativ einfach elektronisch ausgewertet werden kann, und an eine Steuerungs- und Regelungselektronik 8 übermittelt werden kann. Diese Steuerungs- und Regelungselektronik 8 steuert ein Heizelement 7a, 7b, 7c, über das Wasser erhitzt wird. In einer bevorzugten Ausführungsform weist die Vorrichtung zur Steuerung einer Heizvorrichtung einen Spannungsteiler 11 (nicht abgebildet) auf, der einen Force Sensing Resistor (FSR) Sensor und einen in Serienschaltung damit verbundenen Festwiderstand 12 (nicht abgebildet) umfasst. Dabei liegt an dem Spannungsteiler 11 oder an dem Force Sensing Resistor (FSR) Sensor eine konstante Spannung an. Die Messanordnung unterliegt keinem mechanischen Verschleiß wie etwa eine Messturbine. Die Messanordnung kann einfach kalibriert werden. Die Kraftsensoren 6 erlauben eine echte Kraftmessung. Bei bestehenden Durchlauferhitzern kann der Kraftsensor 6 relativ einfach in bestehende Systeme mit Venturidüse 4 und Differenzdruckdose 5 integriert werden. Ein aufwändiger mechanischer Schaltsatz ist nicht mehr erforderlich.

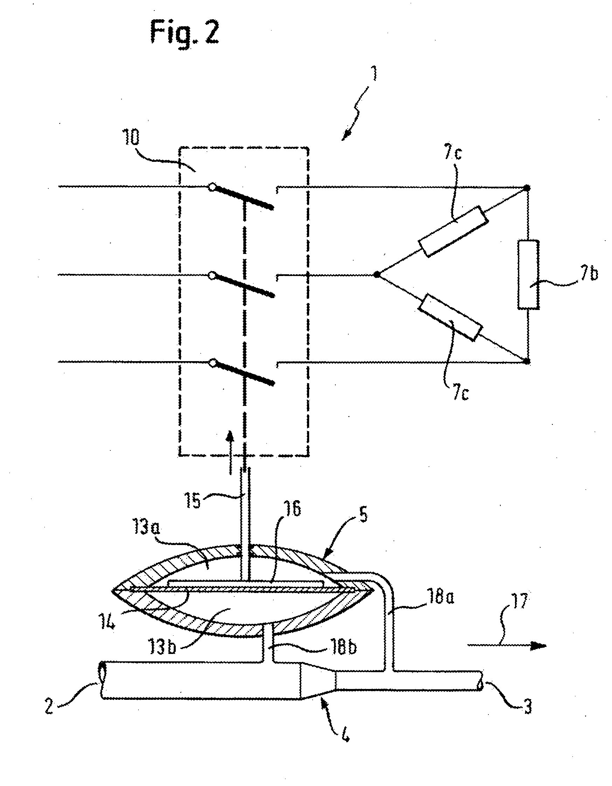

Fig. 2 zeigt in einer schematischen Darstellung eine herkömmliche Vorrichtung zur Steuerung einer Heizvorrichtung. Durch einen Wasserdurchfluss von einem Strömungszulauf 2 zu einem Strömungsablauf 3 in Strömungsrichtung 17 wird an einer Venturidüse 4 durch einen Abgriff eines Überdrucks und eines Unterdrucks ein Differenzdruck gebildet. Dieser Differenzdruck wird in der Differenzdruckdose 5 über eine Membrane 14, über eine mechanische Verbindung mit Stößel 15 und Teller 16 auf einen mechanischen Schalter 10 übertragen. Dieser Schalter 10 bewirkt, dass das Heizelement 7a, 7b, 7c ein- oder ausgeschaltet wird. Eine Feinregulierung ist nicht möglich. Auf Fig. 2 sind die Heizelemente 7a, 7b, 7c ausgeschaltet.

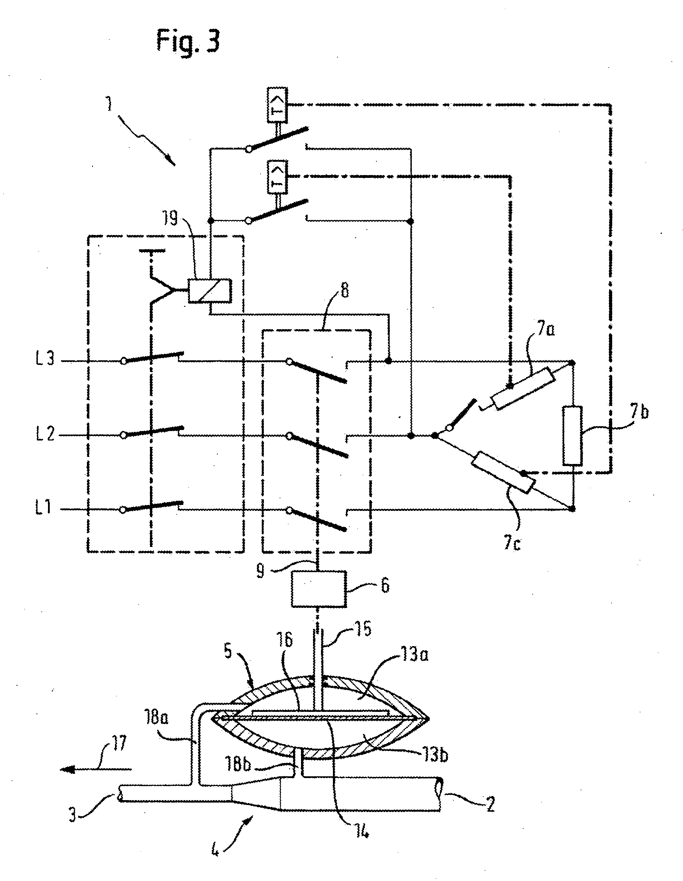

Fig. 3 zeigt ein Prinzipschaltbild einer Ausführungsform eines Durchlauferhitzers. Der elektrische Durchlauferhitzer wird mit Drehstrom betrieben. Der Durchlauferhitzer weist eine Differenzdruckdose 5 auf. Bei der Differenzdruckdose 5 sind zwei Membrankammern 13a, 13b durch eine bewegliche Membran 14 getrennt. Diese Membran 14 ist mit einem Stößel 15 verbunden der die Druckdifferenz auf einen Sensor 6 überträgt. Beide Kammern 13a, 13b sind mit Wasser gefüllt und über jeweils eine Verbindungsleitung 18a, 18b an die Venturidüse 4 des elektrischen Durchlauferhitzers angeschlossen. Der Rohrquerschnitt der Venturidüse ist dabei an beiden Anschlussstellen unterschiedlich. An der Anschlussstelle mit geringerem Querschnitt ist die Strömungsgeschwindigkeit höher, da der Wasserdurchsatz an beiden Anschlussstellen gleich ist. Bei einem endlichen Wasserdurchfluss ist der hydrostatische Druck der mit dem engeren Rohr verbundenen Kammer 13b geringer. Dies führt zu einer Auslenkung der Membran 14, durch die der Stößel 15 bewegt wird. Die Bewegung des Stößels 15 wird auf den Sensor 6 übertragen. Die Spannung zur Versorgung einer Magnetspule 19 wird zwischen zwei Phasen des Drehsturmanschlusses abgegriffen. Die Heizelemente 7a, 7b, 7c sind im Dreieck geschaltet. Ein Heizelement 7a ist über einen Leistungswahlschalter abschaltbar. Die Spannung zur Versorgung der Magnetspule 19 wird zwischen den an diesem abschaltbaren Heizelement 7a anliegenden Phasen abgegriffen. Dies ist bei einer Dreieckschaltung sinnvoll, denn wenn bei abgeschaltetem Heizelement 7a eine Phase, an der abgegriffen wird als offener Eingang ausfällt, wird diese über die Heizelemente 7b bzw. 7c auf das Potential der dritten Phase, an der nicht abgegriffen wird gezogen. Damit steht weiterhin eine Versorgungsspannung für die Magnetspule 19 zur Verfügung. Wenn bei zugeschaltetem Heizelement 7a eine Phase, an der abgegriffen wird, als offener Eingang ausfallt, so wird das Potential an dieser Phase durch den Spannungsteiler entsprechend der in Reihe geschalteten Widerständen der Heizelemente 7a, 7b bzw. 7a, 7c zwischen den anderen beiden Phasen bestimmt. Der zum Schaltvorgang benötigte Betriebsspannungswert zur Versorgung der Magnetspule 19 ist daher kleiner ausgelegt als der halbe Nennspannungswert.

Durch die erfindungsgemäße Vorrichtung zur Steuerung einer Heizvorrichtung kann mit geringem Aufwand und ohne mechanischen Verschleiß eine Feinregulierung einer Warmwasserbereitung erzielt werden.

### Bezugszeichenliste:

- 1.: Vorrichtung zur Steuerung einer Heizvorrichtung
- 2.: Strömungszulauf
- 3.: Strömungsablauf
- 4.: Venturidüse
- 5.: Differenzdruckdose
- 6.: Kraftsensor
- 7.a, 7.b, 7.c: Heizelement
- 8.: Steuerungs- und/oder Regelungselektronik
- 9.: Elektrisches Signal
- 10.: Schalter
- 11.: Spannungsteiler
- 12.: Festwiderstand
- 13.a, 13.b: Membrankammer
- 14.: Membrane
- 15.: Stößel
- 16.: Teller
- 17.: Strömungsrichtung
- 18.a, 18.b: Verbindungsleitung
- 19.: Magnetspule

## Patentansprüche

1. Vorrichtung (1) zur Steuerung einer Heizvorrichtung zur Erwärmung von Flüssigkeiten, insbesondere in Durchlauferhitzern, umfassend einen Strömungszulauf (2) und einen Strömungsablauf (3), zwischen welchen eine Venturidüse (4) angeordnet ist, an welcher ein die vor und nach der Düse (4) anliegenden Drücke vergleichende Differenzdruckdose (5) angeschlossen ist, welches die ermittelte Druckdifferenz an ein Schaltmittel (10) einer Steuerungs- und/oder Regelungselektronik (8) für ein Heizelement (7) übermittelt, **wobei** als Schaltmittel (10) ein Sensor (6) vorgesehen ist, durch den die übermittelten Druckdifferenzen in eine Vielzahl gestufter oder stufenloser korrespondierender elektrischer Signale für die Steuerungs- und/oder Regelungselektronik (8) umwandelbar sind,
**dadurch gekennzeichnet, dass der Sensor (6) ein Kraftsensor (6) ist.**

2. Vorrichtung (1) zur Steuerung einer Heizvorrichtung nach Anspruch 1, **dadurch gekennzeichnet, dass** die Übermittlung der Druckdifferenzen dadurch erfolgt, dass ein mechanischer Stößel (17) proportional zur übermittelten Druckdifferenz einen Weg zurücklegt, und dieser Weg durch den **Kraftsensor (6)** in eine Vielzahl gestufter oder stufenloser korrespondierender elektrischer Signale (9) für die Steuerungs- und/oder Regelungselektronik (8) umwandelbar ist.

3. Vorrichtung (1) zur Steuerung einer Heizvorrichtung nach Anspruch 1, **dadurch gekennzeichnet, dass** die Kraftsensoren (6) sogenannte Force Sensing Resistor (FSR) Sensoren und/oder Piezosensoren sind.

4. Vorrichtung (1) zur Steuerung einer Heizvorrichtung nach einem der Ansprüche 1 bis **3**, **gekennzeichnet durch** einen Spannungsteiler (11), der einen Sensor (6) und einen in Serienschaltung damit verbundenen Festwiderstand (12) umfasst.

5. Vorrichtung (1) zur Steuerung einer Heizvorrichtung nach Anspruch **3**, **dadurch gekennzeichnet, dass** an dem Spannungsteiler (11) eine konstante Spannung anliegt.

6. Vorrichtung (1) zur Steuerung einer Heizvorrichtung nach Anspruch **2 bis** 4, **dadurch gekennzeichnet, dass** an dem sogenannten Force Sensing Resistor (FSR) Sensor eine konstante Spannung anliegt.

7. Vorrichtung (1) zur Steuerung einer Heizvorrichtung nach einem der vorhergehenden Ansprüche, **dadurch gekennzeichnet, dass** die Venturidüse (4) eine hydraulische Verbindung mit der Differenzdruckdose (5) aufweist, wobei in einer Membrankammer (13a, 13b) eine Membran (14) der Differenzdruckdose (5) eine Verbindung mit einem Teller (16) und einem Stößel (15) aufweist, der Stößel (17) eine mechanische Verbindung mit dem Kraftsensor (6) aufweist, und der Kraftsensor (6) eine elektrische Verbindung mit dem Schalter der Steuerungs- und/oder Regelungselektronik (8) aufweist, und über die elektrische Verbindung ein kontinuierliches elektrisches Signal (9) übertragbar ist.

## Claims

1. Device (1) for controlling a heating device for heating liquids, especially in continuous-flow heaters, comprising a flow inlet (2) and a flow outlet (3), between which a Venturi nozzle (4) is disposed, to which a pressure difference vessel (5) comparing the pressures present before and after the nozzle (4) is connected, which transfers the pressure difference established to a switching means (10) of open-loop and/or closed-loop control electronics (8) for a heating element (7), wherein a sensor (6) is provided as a switching means (10), through which the transferred pressure differences are able to be converted into a plurality of stepped or stepless corresponding electrical signals for the open-loop and/or closed-loop control electronics (8),
**characterised in that** the sensor (6) is a force sensor (6).

2. Device (1) for controlling a heating device according to claim 1, **characterised in that** the pressure differences are transmitted by a mechanical plunger (17) covering a distance proportional to the transferred pressure difference and by this distance being able to be converted by the force sensor (6) into a plurality of stepped or stepless corresponding electrical signals (9) for the open-loop and/or closed-loop control electronics (8).

3. Device (1) for controlling a heating device according to claim 1, **characterised in that** the force sensors (6) are Force Sensing Resistor (FSR) sensors and/or piezosensors.

4. Device (1) for controlling a heating device according to one of claims 1 to 3, **characterised by** a voltage divider (11) comprising a sensor (6) and a fixed resistor (12) combined therewith in a series circuit.

5. Device (1) for controlling a heating device according to claim 3, **characterised in that** a constant voltage is present at the voltage divider (11).

6. Device (1) for controlling a heating device according to one of claims 2 to 4, **characterised in that** a constant voltage is present at the Force Sensing Resistor (FSR) sensor.

7. Device (1) for controlling a heating device according to one of the preceding claims, **characterised in that** the Venturi nozzle (4) has a hydraulic connection with the differential pressure vessel (5), wherein in a membrane chamber (13a, 13b) a membrane (14) of the differential pressure vessel (5) has a connection with a plate (16) and a plunger (15), the plunger (17) has a mechanical connection with the force sensor (6) and the force sensor (6) has an electrical connection with the switch of the open-loop and/or closed-loop control electronics (8), and a continuous electrical signal (9) is able to be transmitted via the electrical connection.

## Revendications

1. Dispositif (1) pour la commande d'un dispositif de chauffage destiné à échauffer des liquides, notamment dans des chauffe-eau instantanés, comprenant une entrée d'écoulement (2) et une sortie d'écoulement (3) entre lesquelles est disposé un tube venturi (4), sur lequel est raccordée une boîte de pression différentielle (5) comparant les pressions appliquées en amont et en aval du tube (4), laquelle transmet la différence de pression détectée à un moyen de commutation (10) d'un dispositif électronique de commande et/ou de réglage (8) pour un élément de chauffage (7), un capteur (6) étant ménagé en tant que moyen de commutation (10), au moyen duquel les différences de pression transmises sont convertibles en une pluralité de signaux électriques correspondants, à étages ou continus, pour le dispositif électronique de commande et/ou de réglage (8), **caractérisé en ce que** le capteur (6) est un capteur de force (6).

2. Dispositif (1) pour la commande d'un dispositif de chauffage selon la revendication 1, **caractérisé en ce que** la transmission des différences de pression est réalisée du fait qu'un coulisseau mécanique (17) parcourt un trajet proportionnellement à la différence de pression détectée, et **en ce que** ce trajet est convertible par le capteur de force (6) en une pluralité de signaux électriques (9) correspondants, à étages ou continus, pour le dispositif électronique de commande et/ou de réglage (8).

3. Dispositif (1) pour la commande d'un dispositif de chauffage selon la revendication 1, **caractérisé en ce que** les capteurs de force (6) sont des dits Force Sensing Resistors (FSR) et/ou des capteurs piézoélectriques.

4. Dispositif (1) pour la commande d'un dispositif de chauffage selon l'une quelconque des revendications 1 à 3, **caractérisé par** un diviseur de tension (11) qui comprend un capteur (6) et une résistance fixe (12) qui y est raccordée en série.

5. Dispositif (1) pour la commande d'un dispositif de chauffage selon la revendication 3, **caractérisé en ce qu'**une tension constante est appliquée sur le diviseur de tension (11).

6. Dispositif (1) pour la commande d'un dispositif de chauffage selon l'une quelconque des revendications 2 à 4, **caractérisé en ce qu'**une tension constante est appliqué sur ledit Force Sensing Resistor (FSR).

7. Dispositif (1) pour la commande d'un dispositif de chauffage selon l'une quelconque des revendications précédentes, **caractérisé en ce que** le tube venturi (4) présente une liaison hydraulique avec la boîte de pression différentielle (5), une membrane (14) de la boîte de pression différentielle (5) présentant dans une chambre à membrane (13a, 13b) une liaison avec un plateau (16) et un coulisseau (15), le coulisseau (17) présentant une liaison mécanique avec le capteur de force (6) et le capteur de force (6) présentant une liaison électrique avec le commutateur du dispositif électronique de commande et/ou de réglage (8), et un signal électrique continu (9) étant transmissible par la liaison électrique.
